# EUROPEAN PATENT APPLICATION

(11) **EP 4 299 374 A2**
(43) Date of publication of application: **03.01.2024**
(21) Application number: 23155429.6
(22) Date of filing: 07.02.2023
(51) Int. Cl.: B60P 7/08

(54) **EASY WEBBING-REMOVING MECHANISM FOR RATCHET TIE-DOWN**

(30) Priority: 29.06.2022 CN 202221643180 U
(71) Applicant: Fuzhou Enchain Webbing Co., Ltd., Fuzhou Fujian 350000 (CN)
(72) Inventor: YOU, Qi, 350000 Fuzhou (CN)
(74) Representative: Dall'Olio, Christian

(57) **Abstract**

The present utility model relates to the field of tensioner structures, and particularly to an easy webbing-removing mechanism for a ratchet tie-down, comprising a reel, a shaft sleeve, a machine shell, and a swing arm side piece. The shaft sleeve is sleeved on the outer wall of the reel and both the machine shell and the swing arm side piece are sleeved on the outer wall of the shaft sleeve. The advantageous effects of the utility model are as follows: in the easy webbing-removing mechanism for a ratchet tie-down provided by the present utility model, an elastic element is usually provided on the machine shell and the swing arm side piece, and the elastic element enables the machine shell and the swing arm side piece to apply an elastic force on the reel in the radial direction thereof; according to the easy webbing-removing mechanism for a ratchet tie-down of the present application, the machine shell and the swing arm side piece are sleeved on the shaft sleeve, and the reel is arranged in the shaft sleeve, so that the elastic force that should be borne by the reel is borne by the shaft sleeve, thereby reducing the pressure borne by the reel, making the rotation of the reel smoother, and making the webbing tightening and webbing rewinding processes of the easy webbing-removing mechanism for a ratchet tie-down smooth.

## Description

### Technical Field

The present utility model relates to the field of a mechanical structure, and particularly to an easy webbing-removing mechanism for a ratchet tie-down.

### Background Art

In the prior art, a tensioner includes a machine shell, a swing arm side piece, a reel, and a ratchet; a through hole is provided on the machine shell and the swing arm side piece, and the machine shell and the swing arm side piece are usually sleeved directly on the reel (via the through hole) and rotatably connected to the reel; the swing arm side piece drives the reel via a ratchet, the webbing is wound on the reel, and the swing arm side piece swings so that the webbing is wound tightly on the reel.

The provision of the above-described structure causes the following disadvantages: during use, the swing arm side piece and the machine shell apply a force in the radial direction of the reel to the reel, so that the reel is eccentric in the through hole; the pressure of the reel against the inner wall of the through hole is uneven, and the pressure is concentrated at a certain point on the inner wall of the reel, so that the rotational resistance of the reel is high; therefore, the reel does not rotate smoothly during the webbing tightening (tensioning the webbing) and webbing rewinding (releasing the tensioned webbing).

### Summary of the Invention

The technical problem to be solved by the present utility model is to provide an easy webbing-removing mechanism for a ratchet tie-down so as to solve the problem that the reel does not rotate smoothly.

In order to solve the above technical problem, one technical solution adopted by the present utility model is an easy webbing-removing mechanism for a ratchet tie-down, comprising a reel, a shaft sleeve, a machine shell, and a swing arm side piece;
wherein the shaft sleeve is sleeved on an outer wall of the reel;
both the machine shell and the swing arm side piece are sleeved on the outer wall of the shaft sleeve;
the shaft sleeve is rotatably connected to the reel, the machine shell, and the swing arm side piece, respectively.

Further, an abutment tab, a latch, a ratchet, and a gasket are included;
wherein the reel penetrates successively through the abutment tab, the ratchet, and the gasket, the abutment tab is fixed to the reel, the latch penetrates radially through the reel, and the latch presses the gasket and the ratchet against a surface of the abutment tab.

Further, a latch is included, and the reel comprises a first half-shaft and a second half-shaft, the first half-shaft and the second half-shaft being fixedly connected by the latch.

Further, a webbing ferrule is further included. The webbing ferrule has a semicircular tubular shape, the webbing ferrule is sleeved on the outer wall of the reel, one side of the webbing ferrule is hinged to the reel, the other side is detachably connected to the reel, and the end of the webbing is arranged between the inner wall of the webbing ferrule and the outer wall of the reel.

Further, the reel comprises a first half-shaft to which the webbing ferrule is hinged and a second half-shaft to which the webbing ferrule is detachably connected.

Further, the axis of rotation of the webbing ferrule is parallel to the axis of the reel.

Further, the outer wall of the reel is provided with a ' 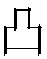 (convex)'-shaped clamping groove, the side of the webbing ferrule is provided with an elastic protrusion, the webbing ferrule is clamped in the clamping groove via the elastic protrusion, and the webbing ferrule is detachably connected to the reel via the clamping groove.

Further, the machine shell and the swing arm side piece are both provided with two through holes, and the machine shell and the swing arm side piece are both connected to the end of the reel via the shaft sleeve and the through hole; the webbing is wound in the middle of the reel.

Further, the shaft sleeve is integrally formed with the machine shell or the swing arm side piece.

The advantageous effects of the present utility model are as follows: in the easy webbing-removing mechanism for a ratchet tie-down provided by the present utility model, an elastic element is usually provided on the machine shell and the swing arm side piece, and the elastic element enables the machine shell and the swing arm side piece to apply an elastic force on the reel in the radial direction thereof; in the prior art, the machine shell and the swing arm side piece are directly sleeved on the reel, and the above-mentioned elastic force is borne by the reel; according to the easy webbing-removing mechanism for a ratchet tie-down of the present application, the machine shell and the swing arm side piece are sleeved on the shaft sleeve, and the reel is arranged in the shaft sleeve, so that the elastic force that should be borne by the reel is borne by the shaft sleeve, thereby reducing the pressure borne by the reel, reducing the rotational frictional force of the reel, making the rotation of the reel smoother, making the webbing tightening and webbing rewinding processes of the easy webbing-removing mechanism for a ratchet tie-down smooth, and making the webbing fall off smoothly after webbing rewinding.

### Brief Description of the Drawings

Fig. 1 is a schematic view of an overall structure of an easy webbing-removing mechanism for a ratchet tie-down according to a specific implementation mode of the present utility model;
Fig. 2 is an exploded view of a partial structure of an easy webbing-removing mechanism for a ratchet tie-down according to a specific implementation mode of the present utility model;
Fig. 3 is an exploded view of a partial structure of an easy webbing-removing mechanism for a ratchet tie-down according to a specific implementation mode of the present utility model;
Fig. 4 is an exploded view of a partial structure of an easy webbing-removing mechanism for a ratchet tie-down according to a specific implementation mode of the present utility model;

### Description of reference numerals:

1, a reel; 2, shaft sleeve; 3, a machine shell; 4, swing arm side piece; 5, a latch; 6, a ratchet; 7, a baffle; 8, a bolt; and 9, seat bushing.

### Detailed Description of the Invention

In order to describe the technical contents, the achieved objects, and the effects of the present utility model in detail, the following is described in combination with the implementation modes and the accompanying drawings.

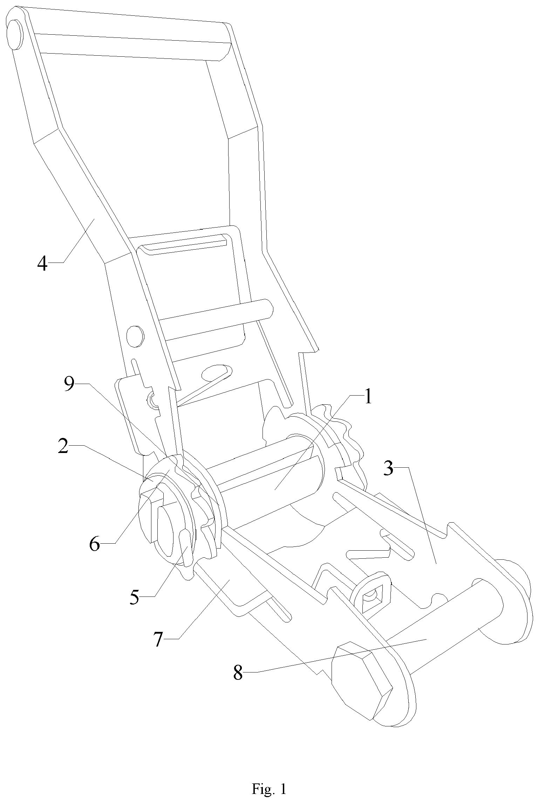

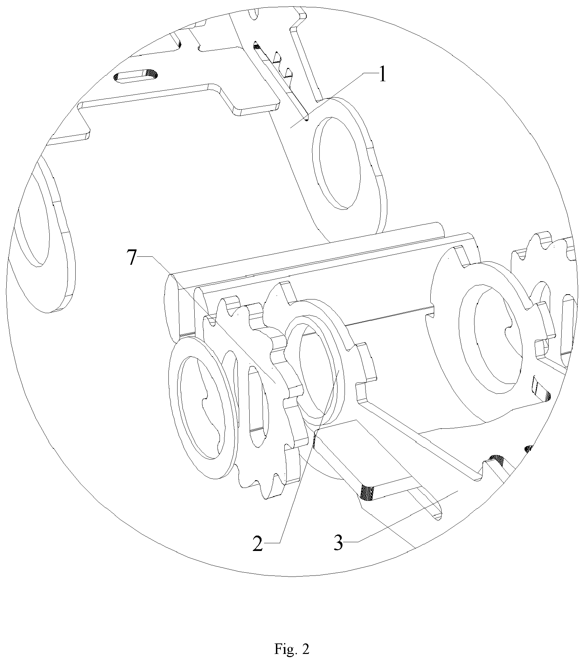

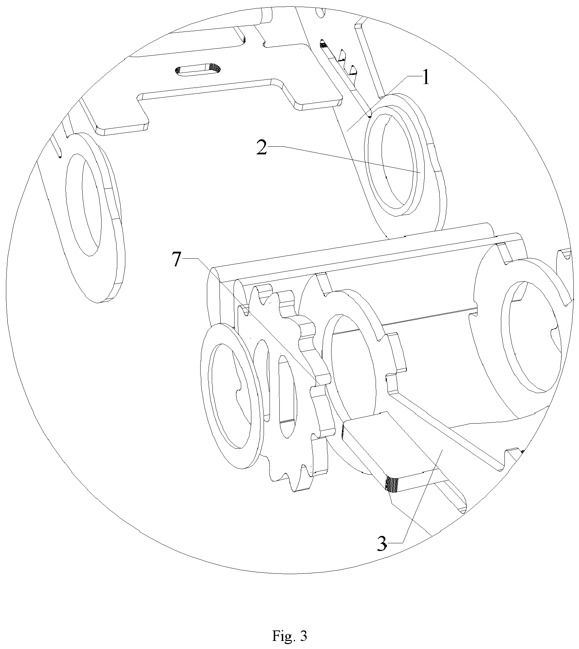

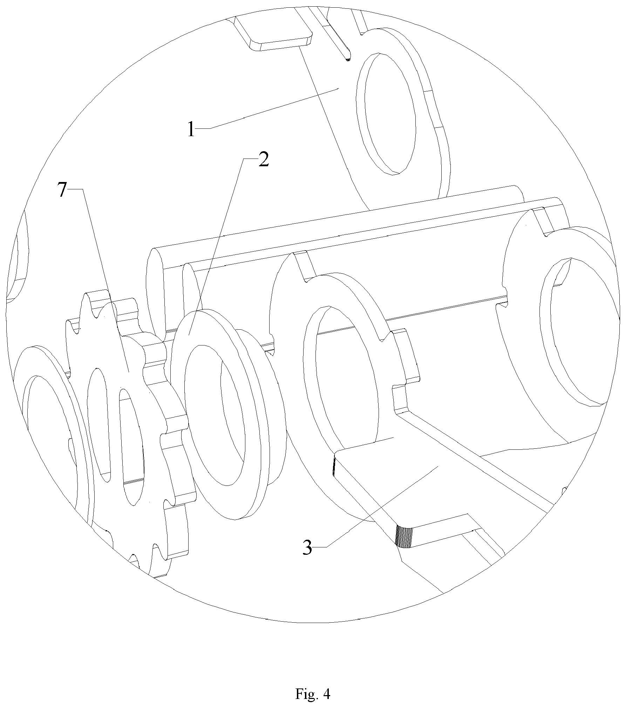

Referring to Figs. 1-4, an easy webbing-removing mechanism for a ratchet tie-down includes a reel 1, a shaft sleeve 2, a machine shell 3, and a swing arm side piece 4;
the shaft sleeve 2 is sleeved on the outer wall of the reel 1;
both the machine shell 3 and the swing arm side piece 4 are sleeved on the outer wall of the shaft sleeve 2;
the shaft sleeve 2 is rotatably connected to the reel 1, the machine shell 3, and the swing arm side piece 4, respectively.

It can be seen from the above description that the advantageous effects of the present utility model are as follows: in the easy webbing-removing mechanism for a ratchet tie-down provided by the present utility model, an elastic element is usually provided on the machine shell 3 and the swing arm side piece 4, and the elastic element enables the machine shell 3 and the swing arm side piece 4 to apply an elastic force on the reel 1 in the radial direction thereof; in the prior art, the machine shell 3 and the swing arm side piece 4 are directly sleeved on the reel 1, and the above-mentioned elastic force is borne by the reel 1; according to the easy webbing-removing mechanism for a ratchet tie-down of the present application, the machine shell 3 and the swing arm side piece 4 are sleeved on the shaft sleeve 2, and the reel 1 is arranged in the shaft sleeve 2, so that the elastic force that should be borne by the reel 1 is borne by the shaft sleeve 2, thereby reducing the pressure borne by the reel 1, reducing the rotational frictional force of the reel 1, making the rotation of the reel 1 smoother, making the webbing tightening and webbing rewinding processes of the easy webbing-removing mechanism for a ratchet tie-down smooth, and making the webbing fall off smoothly after webbing rewinding.

Further, an abutment tab, a latch 5, a ratchet 6, and a gasket are included;
the reel 1 penetrates successively through an abutment tab, a ratchet 6, and a gasket; the abutment tab is fixed to the reel 1, the latch 5 penetrates radially through the reel 1, and the latch 5 presses the gasket and the ratchet 6 against the surface of the abutment tab.

It can be seen from the above description that the fixation of the ratchet 6 and the reel 1 in the prior art is achieved by providing a half-shaft hole in the ratchet 6 and inserting the reel 1 into the half-shaft hole. However, the engagement between the half-shaft hole and the reel 1 is easy to loosen, and the ratchet 6 (namely, the half-shaft hole) is seriously worn during a long time process when the ratchet 6 drives the reel 1 to rotate. Therefore, the abutment tab, the latch 5, and the gasket are provided. The latch 5 clamps the ratchet 6 on the abutment tab via the gasket, the abutment tab is integrally formed with the reel 1, and the above-mentioned arrangement assists in fixing the ratchet 6 and the reel 1 via the friction force of the ratchet 6 against the abutment tab so as to avoid serious wear of the ratchet 6.

### Further, a latch 5 is included, and the reel 1 comprises a first half-shaft and a second half-shaft, the first half-shaft and the second half-shaft being fixedly connected by the latch 5.

It can be seen from the above description that the latch 5 is a metal member having a plastic deformation capability, and the reel 1 is fixed via the latch 5, so that the structure of the reel 1 is stable and it is easy to disassemble and assemble.

Further, a webbing ferrule is further included. The webbing ferrule has a semicircular tubular shape, the webbing ferrule is sleeved on the outer wall of the reel 1, one side of the webbing ferrule is hinged to the reel 1 and the other side is detachably connected to the reel 1, and the end of the webbing is arranged between the inner wall of the webbing ferrule and the outer wall of the reel 1.

As can be seen from the above description, the portion of the webbing passing through the reel 1 is so long that it easily affects the rotation of the reel 1, and the portion of the webbing passing through the reel 1 is too short so that the webbing is easily detached from the reel 1. The above arrangement can avoid the two disadvantages.

Further, the reel 1 comprises a first half-shaft to which the webbing ferrule is hinged and a second half-shaft to which the webbing ferrule is detachably connected.

It can be seen from the above description that the above-mentioned content defines that the webbing ferrule will close the webbing channel of the reel 1, facilitating the webbing being jammed by the webbing ferrule. The need to manually adjust the end of the webbing to jam it between the webbing ferrule and the reel 1 is avoided.

Further, the axis of rotation of the webbing ferrule is parallel to the axis of the reel 1.

It can be seen from the above description that a simple and efficient hinge structure for a webbing ferrule is provided.

Further, the outer wall of the reel 1 is provided with a ' 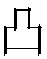 (convex)'-shaped clamping groove, the side of the webbing ferrule is provided with an elastic protrusion, the webbing ferrule is clamped in the clamping groove via the elastic protrusion, and the webbing ferrule is detachably connected to the reel 1 via the clamping groove.

It can be seen from the above description that a simple and efficient detachable structure of a webbing ferrule is provided, wherein the clamping groove is formed by two protrusions on the reel 1, and the webbing ferrule is interposed between the two protrusions.

Further, the machine shell 3 and the swing arm side piece 4 are both provided with two through holes, and the machine shell 3 and the swing arm side piece 4 are both connected to the end of the reel 1 via the shaft sleeve 2 and the through hole; the webbing is wound in the middle of the reel 1.

Further, the shaft sleeve is integrally formed with the machine shell or the swing arm side piece.

It can be seen from the above description that both the machine shell and the swing arm side piece are provided with a clearing hole, the clearing hole is stamped by using a stamping process, and the aperture of the clearing hole is enlarged so that the reel can pass through. After the machine shell and the swing arm side piece are stamped, the scenario that a tubular protrusion which forms a structure in which the swing arm side piece is concave or the machine shell is convex is avoided, thus forming a shaft sleeve. The integral formation of the shaft sleeve with the machine shell or the swing arm side piece saves costs and avoids the problem of assembly trouble, and the shaft sleeve is not easy to fall off during daily use.

The application background of the easy webbing-removing mechanism for a ratchet tie-down provided by the present utility model is: when the rotational resistance of the reel 1 in the tensioner is high.

### Embodiment 1

Referring to Figs. 1-2, an easy webbing-removing mechanism for a ratchet tie-down includes a reel 1, a shaft sleeve 2, a machine shell 3, and a swing arm side piece 4;
the shaft sleeve 2 is sleeved on the outer wall of the reel 1;
both the machine shell 3 and the swing arm side piece 4 are sleeved on the outer wall of the shaft sleeve 2;
the shaft sleeve 2 is rotatably connected to the reel 1, the machine shell 3, and the swing arm side piece 4, respectively.

The easy webbing-removing mechanism for a ratchet tie-down further comprises an abutment tab, a latch 5, a ratchet 6, a gasket, and a webbing ferrule;
the reel 1 penetrates successively through an abutment tab, a ratchet 6, and a gasket; the abutment tab is fixed to the reel 1, the latch 5 penetrates radially through the reel 1, and the latch 5 presses the gasket and the ratchet 6 against the surface of the abutment tab.

The reel 1 comprises a first half-shaft and a second half-shaft, the first half-shaft and the second half-shaft being fixedly connected by the latch 5.

The webbing ferrule has a semicircular tubular shape, the webbing ferrule is sleeved on the outer wall of the reel 1, one side of the webbing ferrule is hinged to the reel 1, the other side is detachably connected to the reel 1, and the end of the webbing is arranged between the inner wall of the webbing ferrule and the outer wall of the reel 1.

The webbing ferrule is hinged to the first half-shaft, and the webbing ferrule is detachably connected to the second half-shaft.

The axis of rotation of the webbing ferrule is parallel to the axis of the reel 1.

A baffle 7 is further provided in the machine shell 3, the baffle 7 is movably arranged in the machine shell 3, and the ratchet 6 can be jammed after the baffle 7 is moved. The machine shell 3 consists of two plates arranged opposite to each other and connected by means of a detachable bolt 8. The machine shell 3 is sleeved on the reel 1 via a seat bushing 9.

The use and principle of the easy webbing-removing mechanism for a ratchet tie-down provided by the utility model are as follows:
Both the machine shell 3 and the swing arm side piece 4 are provided with one clamping plate, the clamping plate is jammed on the ratchet 6, and the clamping plate only prevents the machine shell 3 and the swing arm side piece 4 from rotating around the reel 1 in one of clockwise and counterclockwise directions.

When the worker rotates the swing arm side piece 4, the swing arm side piece 4 drives the ratchet 6 to rotate, the ratchet 6 drives the reel 1, the webbing is jammed in the reel 1, and the reel 1 drives the webbing to be wound on the outer wall of the reel 1.

The shaft sleeve 2 obstructs the force transmission of the machine shell 3 to the reel 1 and the swing arm side piece 4 to the reel 1, so that the reel 1 is only subjected to the self-weight and the tension of the webbing. Therefore, the pressure of the reel 1 to other components is reduced, and the rotation resistance of the reel 1 is reduced.

The reel 1 is fixed to the ratchet 6 by two means of penetrating through the ratchet 6 and the abutment tab pressing against the ratchet 6, so that the ratchet 6 is stressed uniformly and the wear of the ratchet 6 is less.

The webbing ferrule jams the webbing on the outer wall of the reel 1, preventing the webbing from falling out of the reel 1.

The shaft sleeve 2 is in transitional engagement with the swing arm side piece 4 and the machine shell 3, respectively, while the reel 1 and the shaft sleeve 2 are in clearance engagement.

The above-mentioned description is merely an embodiment of the present invention, and does not limit the scope of the present invention. Any equivalent change made by using the contents of the description and the drawings of the present invention or directly or indirectly used in relevant technical fields is likewise included in the scope of protection of the present invention.

## Claims

1. An easy webbing-removing mechanism for a ratchet tie-down, **characterized by** comprising a reel, a shaft sleeve, a machine shell, and a swing arm side piece;
wherein the shaft sleeve is sleeved on an outer wall of the reel;
both the machine shell and the swing arm side piece are sleeved on the outer wall of the shaft sleeve;
the shaft sleeve is rotatably connected to the reel, the machine shell, and the swing arm side piece, respectively.

2. The easy webbing-removing mechanism for a ratchet tie-down according to claim 1, **characterized by** further comprising an abutment tab, a latch, a ratchet, and a gasket;
wherein the reel penetrates successively through the abutment tab, the ratchet, and the gasket, the abutment tab is fixed to the reel, the latch penetrates radially through the reel, and the latch presses the gasket and the ratchet against a surface of the abutment tab.

3. The easy webbing-removing mechanism for a ratchet tie-down according to claim 1, **characterized by** further comprising a latch, wherein the reel comprises a first half-shaft and a second half-shaft, the first half-shaft and the second half-shaft being fixedly connected via the latch.

4. The easy webbing-removing mechanism for a ratchet tie-down according to claim 1, **characterized by** further comprising a webbing ferrule, wherein the webbing ferrule has a semicircular tubular shape, the webbing ferrule is sleeved on the outer wall of the reel, one side of the webbing ferrule is hinged to the reel and the other side is detachably connected to the reel, and an end of the webbing is provided between an inner wall of the webbing ferrule and the outer wall of the reel.

5. The easy webbing-removing mechanism for a ratchet tie-down according to claim 4, **characterized in that** the reel comprises a first half-shaft and a second half-shaft, the webbing ferrule is hinged to the first half-shaft, and the webbing ferrule is detachably connected to the second half-shaft.

6. The easy webbing-removing mechanism for a ratchet tie-down according to claim 4, **characterized in that** an axis of rotation of the webbing ferrule is parallel to an axis of the reel.

7. The easy webbing-removing mechanism for a ratchet tie-down according to claim 4, **characterized in that** the outer wall of the reel is provided with a ' 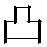 (convex)'-shaped clamping groove, a side of the webbing ferrule is provided with an elastic protrusion, the webbing ferrule is jammed in the clamping groove via the elastic protrusion, and the webbing ferrule is detachably connected to the reel via the clamping groove.

8. The easy webbing-removing mechanism for a ratchet tie-down according to claim 1, **characterized in that** two through holes are provided on both the machine shell and the swing arm side piece, and the machine shell and the swing arm side piece are both connected to an end of the reel via the shaft sleeve and the through hole; a webbing is wound in a middle of the reel.

9. The easy webbing-removing mechanism for a ratchet tie-down according to claim 1, **characterized in that** the shaft sleeve is integrally formed with the machine shell or the swing arm side piece.
